(19) Europäisches Patentamt
European Patent Office
Office européen des brevets

(11) **EP 4 492 011 A1**

(12) **EUROPEAN PATENT APPLICATION**

(43) Date of publication:
**15.01.2025 Bulletin 2025/03**

(21) Application number: **23184935.7**

(22) Date of filing: **12.07.2023**

(51) International Patent Classification (IPC):
**G01C 25/00** (2006.01)    **G01P 21/00** (2006.01)
**G06N 20/00** (2019.01)

(52) Cooperative Patent Classification (CPC):
**G01C 25/005; G01P 21/00; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
- **Podder, Itilekha**
  **1093 Budapest (HU)**
- **Fischl, Tamas**
  **2462 Martonvásár (HU)**

Remarks:
Amended claims in accordance with Rule 137(2) EPC.

(54) **A METHOD FOR CALIBRATING AT LEAST ONE ON MICRO-ELECTROMECHANICAL SYSTEMS BASED INERTIAL SENSOR**

(57)     The invention relates to a method (100) for calibrating at least one on micro-electromechanical systems based inertial sensor (50), comprising the following steps:
- Providing (101) input data, the input data comprising at least sensor data, the sensor data being specific for the at least one inertial sensor (50),
- Predicting (102) a working point by a machine-learning model based on the provided input data, the working point being specific for a parametrization of the at least one inertial sensor (50),

- Carrying out (103) iterative adjustment steps for a fine adjustment of the working point, the adjustment steps comprising a comparison of an effect of a currently set value with a reference value for each inertial sensor (50), the currently set value being set based on the predicted working point, the number of iterations of the adjustment steps being flexible and depended on the comparison,
- Providing (104) a final parameter field for the at least one inertial sensor (50) based on the predicted working point or the adjustment steps for the fine adjustment.

**Fig. 1**

EP 4 492 011 A1

**Description**

The present invention relates to a method for calibrating at least one on micro-electromechanical systems based inertial sensor. Furthermore, the invention relates to a computer program, a data processing apparatus as well as a computer-readable storage medium for this purpose.

State of the art

Micro-electromechanical systems (MEMS) based Inertial Measurement Units (IMUs) have shown exponential growth and widespread adaptation in different fields such as consumer products, automotive applications, military applications, and more due to the low cost, miniaturization, and mass production (see e.g.: K. Maenaka, "MEMS inertial sensors and their applications," in 2008 5th International Conference on Networked Sensing Systems, 2008, pp. 71-73.). MEMS-based IMUs comprises inertial sensors including accelerometers, gyroscopes, etc.

A gyroscope is a sensor sensitive to the angular velocity of the motion of the moving body relative to the inertial space. An accelerometer is a sensor sensitive to linear acceleration and converted into a usable output signal. These are the important parts of inertial systems and the primary variables influencing how well they function. The demand for inertial sensor accuracy is gradually rising as cutting-edge technologies like navigation and positioning, autonomous driving, and personal wearable gadgets proliferate. In contrast, it is still challenging and expensive to produce high-precision inertial sensors for high-end production. MEMS inertial sensors are subjected to various deterministic and random errors such as measurement error, alignment error, quantization noise, or random noise. Such uncompensated and complex errors accumulate over the production process and impact the performance of the sensors. Thus, calibration and characterization become important and unavoidable steps in the MEMS manufacturing process for high precision and accuracy of the inertial sensors.

In the field of MEMS sensors, calibration can be understood as a process aimed at finding the correct working point. Usually, this process is performed as a series of successive process steps. The search for the working point can often be challenging and time-consuming.

Huang et al. (F. Huang, Z. Wang, L. Xing, and C. Gao, "A MEMS IMU gyroscope calibration method based on deep learning," IEEE Transactions on Instrumentation and Measurement, vol. 71, pp. 1-9, 2022), proposed a deep learning-based calibration method for MEMS IMU gyroscopes. The proposed method aimed to improve calibration accuracy by using a convolutional neural network to forecast the systematic inaccuracy of the gyroscopes.

Fontanella et al. (R. Fontanella, D. Accardo, E. Caricati, S. Cimmino, and D. De Simone, "An extensive analysis for the use of back propagation neural networks to perform the calibration of mems gyro bias thermal drift," in 2016 IEEE/ION Position, Location and Navigation Symposium (PLANS).

IEEE, 2016, pp. 672-680) proposed a back-propagation neural networks-based method for calibrating for MEMS gyro bias thermal drift. Simulated and experimental data were used to evaluate the method which achieved higher accuracy with a maximum error of only 2.5%. Although external factors such as temperature fluctuations or mechanical shock can have an impact on the accuracy of the approach.

Wang et al. (J. Wang, W. Lou, W. Liu, and P. Liu, "Calibration of mems based inertial measurement unit using long short-term memory network," in 2019 IEEE 14th International Conference on Nano/Micro Engineered and Molecular Systems (NEMS). IEEE, 2019, pp. 118-121) proposed a long short-term memory (LSTM) network to calibrate MEMS IMU. In comparison to conventional calibration methods, the suggested method was able to manage complicated and nonlinear interactions between input and output data and it could anticipate the calibration parameters more precisely. Few drawbacks of this method could be the inadequacy of the approach in case the sensor drift is too extreme or unpredictable, and computationally intensive.

In another article (L. Wang, Y. Guan, and X. Hu, "Compounded calibration based on fnn and attitude estimation method using intelligent filtering for low-cost mems sensor application," Mathematical Problems in Engineering, vol. 2019, 2019.), the authors proposed a hybrid approach where the attitude estimation was utilized to increase the accuracy of the calibration process while the feedforward neural network was used to estimate the calibration coefficients.

Another article (R. Fontanella, D. Accardo, R. S. L. Moriello, L. Angrisani, and D. De Simone, "Mems gyros temperature calibration through artificial neural networks," Sensors and Actuators A: Physical, vol. 279, pp. 553-565, 2018) suggested a temperature calibration method for MEMS gyros based on artificial neural networks. The suggested method estimated the temperature drift of MEMS gyros using a backpropagation neural network and an auto-regressive model. The work,
however, has limitations due to the limited dataset and lack of validation using other MEMS gyro models.

Disclosure of the invention

According to aspects of the invention a method with the features of claim 1, a computer program with the features of claim 8, a data processing apparatus with the features of claim 9 as well as a computer-readable storage medium with the features of claim 10 are provided. Further features and details of the invention are disclosed in the respective dependent claims, the description, and the drawings. Features and details described in the context to the method according to the invention also correspond to the computer program, the data processing apparatus as well as the computer-readable storage medium, and vice versa in each case.

According to a first aspect of the invention a method for calibrating at least one - particularly on micro-electromechanical systems based - inertial sensor is provided. The method may comprise the following steps:

- Providing input data, particularly in the form of digital data, the input data preferably comprising at least sensor data, which is specific for the at least one inertial sensor,
- Predicting a working point by a machine-learning model based on the provided input data, wherein the working point may be specific for a parametrization of the at least one inertial sensor,
- Carrying out iterative adjustment steps for a fine adjustment of the working point, wherein the adjustment steps may comprise a comparison of an effect of a currently set value with a reference value for each inertial sensor, and wherein the currently set value may be set based on the predicted working point, and wherein the number of iterations of the adjustment steps may be flexible and/or depended on the comparison,
- Providing a final parameter field for the at least one inertial sensor based on the predicted working point and/or the adjustment steps for the fine adjustment.

In other words, a machine-learning model may be used to predict an initial working point and further adjustment steps may afterwards be used to adjust this initial working point further. Preferably, the machine-learning model has therefore been trained on this prediction. The adjustment steps may correspond to the calibration steps that are already known for common calibration techniques. However, the incorporation of machine-learning techniques may allow to significantly reduce the number of iterations of the adjustment steps.

According to the invention, and particularly in the field of MEMS (Micro-electromechanical systems) sensors, calibration can be understood as a process, in the following also referred to as calibration process, aimed at finding a correct working point for at least one sensor. The method according to the invention may comprise predicting a (initial) working point based on machine-learning. Consequently, the step of predicting may become part of a calibration process. Additionally, the calibration process may comprise at least one adjustment step, particularly iterative adjustment steps, that comprises comparing an effect of a currently set value with a reference value for each sensor. This reference value may be provided by a signal from an external instrument, e.g., temperature or angular velocity or the like, but it can also be an internal signal from the sensor. The currently set value may be set on basis of the predicted working point for the sensor. Each one of the adjustment steps may comprise at least one or multiple of the following trimming steps that are used for a trimming. The trimming may therefore refer to at least one of the following trimming steps: quadrature error compensation, misalignment compensation, mode matching, gain adjustment, frequency compensation, noise correction, sensitivity compensation, offset compensation, which may be used to set and further refine the working point.

The working points, also referred to as operating points, may be different for each sensor due to the technological differences between the MEMS and application-specific integrated circuit (ASIC) components or because of the encapsulation. Particularly the MEMS-based component data may have the most influence on the trimming.

The demand for more affordable sensors has been driven by the proliferation of inertial sensor applications, and those relying on Micro-Electro-Mechanical Systems (MEMS) based technology have indeed been receiving attention and widespread use, especially for automotive applications. MEMS gyroscopes are developed in complex manufacturing processes, sometimes with high variance, and must meet tight customer specifications. Products may go through a thorough calibration and testing process to meet customer standards (such as sensitivity, offset noise, robustness against vibration, etc.). To ensure calibration and testing efficiency, several sensors may be run simultaneously, preferably in parallel, thus increasing process efficiency and ultimately productivity. The adjustment steps may comprise a sequence of consecutive actions, with each step involving an excitation (register writing into an application-specific integrated circuit (ASIC)) and a read-back of the values (measurement, read-back of value from ASIC register). All the sensors may go through identical calibration procedures in a parallelized calibration process, but due to manufacturing variations, a separate working point ensures that the standard is met in each case. The method according to the invention may be used to optimize the calibration by finding an initial working point of individual sensors based on Artificial Intelligence (AI) algorithms, thus reducing the time-consuming calibration process.

It may be possible that the step of carrying out the iterative adjustment steps comprises at least one of the following steps:

- Storing the predicted working point, particularly by writing the predicted working point into an input register,
- Using the stored working point as a current working point,
- Setting the currently set value at the at least one inertial sensor based on the current working point, thereby setting a calibration measurement parameter at the at least one inertial sensor, wherein preferably the predicted working point is read out from an output register after a predefined wait time, where the waiting time may be predefined to create an artificial pause,

- Checking the current (and particularly read out) working point against a quality check condition, particularly by determining whether the current working point falls within a predefined limit and/or by carrying out the comparison of the effect of the currently set value with the reference value,

- Repeating the adjustment steps with the flexible number of iterations depending on the check until the quality check condition is fulfilled, thereby fine adjusting the current working point,

- Setting the current and particularly fine-adjusted working point as a final working point if the quality check condition is fulfilled.

This allows to limit the number of adjustment steps to the necessary ones and thus to accelerate the calibration. Finally, the step of providing the final parameter field may comprise setting the calibration measurement parameter based on the final working point at the at least one inertial sensor.

It is possible that each one of the adjustment steps comprises at least one or multiple of the following trimming steps used to fine-adjust the working point: quadrature error compensation, misalignment compensation, mode matching, gain adjustment, frequency compensation, noise correction, sensitivity compensation, offset compensation. The trimming makes it thereby possible to compensate for irregularities between different sensors.

It is further possible that the calibration of the at least one inertial sensor comprises calibrating multiple inertial sensors at least partially in parallel, the adjustment steps thereby being carried out in parallel for each one of the inertial sensors. This may further accelerate the calibration process.

It may also be possible that the provided input data is pre-processed, wherein the pre-processed input data may be provided as input for the machine-learning model. The pre-processing may comprise at least one of the following: checking for missing values, checking for data type mismatch, checking for data structure consistency, checking for data availability, data duplicate removal, data scaling, and feature selection. This ensures that the trained machine-learning model can consistently process the input data.

The inertial sensor may be based on micro-electromechanical systems (MEMS). Therefore, the inertial sensor may be configured as a microscopic device that incorporates both electronic and moving parts. It may, e.g., be made up of components between 1 and 100 micrometres in size and/or it may size from 20 micrometres to a millimetre. Furthermore, the inertial sensor may comprise at least one central unit that processes data. The sensor may also be referred to as microsensor. Preferably, the at least one inertial sensor is configured for an application with an autonomous vehicle. The at least one inertial sensor may comprise a gyroscope, which may be sensitive to an angular velocity of the motion of the vehicle relative to the inertial space, and the at least one inertial sensor may comprise an accelerometer, which may be sensitive to linear acceleration of the vehicle. The inertial sensor may be configured to be installed in the vehicle and to be read out by a data processing apparatus integrated into the vehicle for autonomous driving applications.

It is also possible that the input data further comprises component data and/or internal measurement data, the component data being specific for component-level measurements, and the internal measurement data resulting from an earlier calibration. This allows the initial prediction of the operating point to be based on a larger amount of relevant data. Furthermore, in contrast to common calibration processes, it allows to base the calibration on past calibrations.

In another aspect of the invention, a computer program may be provided, in particular a computer program product, comprising instructions which, when the computer program is executed by a computer, cause the computer to carry out the method according to the invention. Thus, the computer program according to the invention can have the same advantages as have been described in detail with reference to a method according to the invention.

The calibration process may be carried out by the computer program according to the invention, particularly in the form of a measurement software (SW). The SW may be used to write and/or read registers (e.g., to set excitation/to perform measurements) and, if necessary, to control the measurement system. It may be particularly possible by the method according to the invention to accelerate the sequential calibration process of a micromachined angular rate gyroscope by determining the optimal operating point for the individual sensor using an AI-based solution. The method according to the invention may also incorporate component data from previous component-level measurements (ASIC and MEMS component measurement data) and may be configured to predict the correct working point in place of at least some of the commonly used sequential calibration steps. Along with that, a statistical measure-based monitoring system may be provided. This ensures smooth production implementation and operation in case process change, data anomaly, or model drift occurs.

In another aspect of the invention, an apparatus for data processing may be provided, which is configured to execute the method according to the invention. As the apparatus, for example, a computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by a computer, cause the computer to carry out the steps of the method according to the invention. The storage medium may be formed as a data storage device such as a hard disk and/or a non-volatile memory and/or a memory card and/or a solid-state drive. The storage medium may, for example, be integrated into the computer.

Furthermore, the method according to the invention may be implemented as a computer-implemented method.

Further advantages, features and details of the invention will be apparent from the following description, in which embodiments of the invention are described in detail with reference to the drawings. In this context, the features mentioned in the claims and in the description may each be essential to the invention individually or in any combination. Showing:

Fig. 1:    A method, computer program, a storage medium and apparatus according to embodiments of the invention.

Fig. 2    A visualization of an inertial sensor according to embodiments of the invention.

Fig. 3    An exemplary inertial sensor production chain.

Fig. 4    An exemplary read-and-write procedure.

Fig. 5    A full range sequence of process steps for finding a working point.

Fig. 6    An exemplary architecture for finding a working point according to embodiments of the invention.

Fig. 7    Another exemplary read-and-write procedure according to embodiments of the invention.

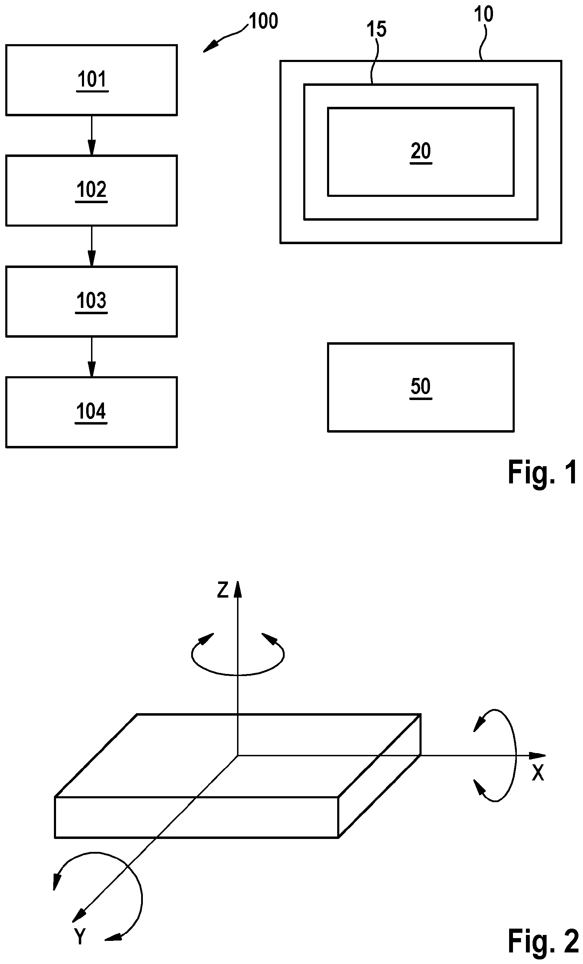

Figure 1 shows a method 100 for calibrating at least one on micro-electromechanical systems based inertial sensor 50 according to embodiments of the invention. According to a first step 101, input data may be provided. The input data may comprise at least sensor data, the sensor data being specific for the at least one inertial sensor 50. According to a second step 102, a working point may be predicted by a machine-learning model based on the provided input data, the working point being specific for a parametrization of the at least one inertial sensor. According to a third step 103, iterative adjustment steps may be carried out for a fine adjustment of the working point, the adjustment steps comprising a comparison of an effect of a currently set value with a reference value for each inertial sensor 50. The currently set value may be set based on the predicted working point and the number of iterations of the adjustment steps may be flexible and depended on the comparison. Finally, according to a fourth step 104, a final parameter field for the at least one inertial sensor 50 may be provided based on the predicted working point or the adjustment steps for the fine adjustment.

Additionally, a computer program 20 may be provided comprising instructions which, when the computer program 20 is executed by a data processing apparatus 10 and particularly a computer 10, cause the data processing apparatus 10 to carry out the method 100 according to embodiments of the invention. Furthermore, a computer-readable storage medium 15 according to embodiments of the invention may be provided to storage the computer program.

Inertial sensors based on Micro-electromechanical systems (MEMS)-Inertial Measurement Units (IMU) are often complex and combine a wide range of engineering disciplines, such as MEMS technology and micromachining, ASIC and semiconductor technology, analogue and digital signal processing, electronic networking interfaces, packaging and electronics integration, and high-volume manufacturing methods. Incorporating a growing number of functions and features into the architecture is a current challenge, leading to a dramatic increase in calibration time, material, and manufacturing costs. MEMS inertial sensors have similarities to other products in the sense that a high level of design quality is the primary determinant of performance. But in addition to client requirements and standards, variables like process quality variations, inadequate material quality control, human mistake, or undetected design flaws highlight the significance of calibration and testing. Thus, an efficient trimming technique is required for MEMS inertial sensors to correct process-induced sensor mismatches.

The method according to embodiments of the invention may outperform conventional calibration techniques in terms of accuracy. Conventional techniques, including those relying on AI methods, exhibit limitations such as a lack of generalizability, high computational requirements, incomplete assessments, and non-implementable architecture.

IMUs are capable of measuring a wide range of parameters, including velocity, direction, acceleration, specific force, angular rate, and (if a magnetometer is present) the magnetic fields around the object by combining data from a variety of sensor types to produce accurate output. To give a full measurement setup, multi-axis accelerometers, and gyroscopes are coupled in the full IMU in a nearly orthogonal configuration for the most common configuration. Figure 2 shows the different axis x (longitudinal acceleration, roll rate), y (lateral acceleration, pitch rate) and z (vertical acceleration, yaw rate) of sensitivity of three- axis angular rate gyroscopes and three-axis accelerators with a maximum of six degrees of freedom (DOF). Gyroscopes may be used to measure angular rate, i.e., the rotation of an object in terms of yaw, pitch, or roll. The roll-rate gyroscopes are required to prevent the vehicle's rollover, deploy airbags for passenger safety, or the like.

The Coriolis Vibratory Gyroscope (CVG) principle may serve as the foundation for the gyroscope to detect and measure angular rate. The Coriolis effect, used by the vibratory gyroscopes, can occur due to the oscillation (vibration) driven into the MEMS and an existing angular velocity. The micromechanical structure may translate the applied angular acceleration into a capacitance change. The change in capacitance may further be converted into a digital signal by the ASIC component. After the digital signal demodulation and signal conditioning, a detectable signal proportional to the angular rate can be generated.

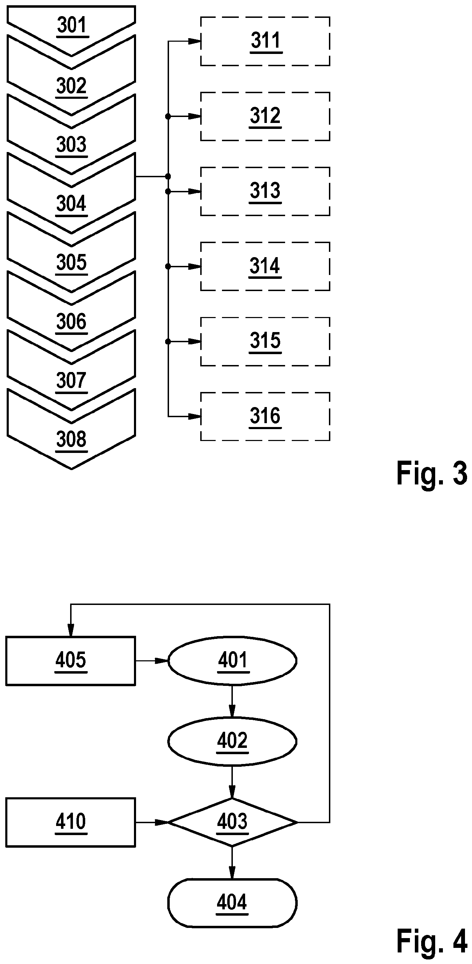

In general, MEMS inertial sensors encounter two types of errors, i) systematic or deterministic error (such as misalignment error, bias, non-orthogonality, etc.) and ii) random or stochastic error (such as bias drifts, scale factor drifts, etc.). Manufacturing flaws, such as irregularities in thickness, width, or vacuum level and poor calibration system, give rise to systematic errors in terms of uncertainties in parameters like resonant frequency, quadrature motion, and quality factor, thereby typically impair the performance of the MEMS-based angular rate sensors. Figure 3 depicts the high-level overview of the MEMS inertial sensor production process along with detailed calibration measures associated with a first level trimming 304. The process flow comprises iterative sequential measurement blocks where some measurement blocks are interdependent, i.e., the prior block's measurement setting influences the later block's measurement setting.

In Figure 3, the production process according to embodiments of the invention is described in more detail. A first production step 301 may include a wafer production. Afterwards, according to a second production step 302, a wafer level test may be performed, and according to a third production step 303, a first level assembly may be performed. According to a fourth production step 304, a first level trim may be provided that includes multiple different trimming steps 311 - 316. Then, according to a fifth production step 305, a first level test may be carried out, and according to a sixth production step 306, a second level trim and test may be performed. The seventh production step 307 may include a device level test and the last production step 308 may comprise the field application. The trimming steps 311-316 may exemplarily include a quadrature error compensation 311, a misalignment compensation 312, a mode matching 313, a gain adjustment 314, a noise correction 315 and an offset and sensitivity compensation 316.

The inertial sensor may be configured according to a multi-level, open-loop, or closed-loop inertial sensor designs. According to a preferred embodiment of the invention, a calibration process may be provided that can be used for a closed-loop inertial sensor for automotive applications. Furthermore, an AI-based optimization of the first level-trimming process 304 shown in Figure 3 may be provided.

The first-level trimming may be used to set and optimize the working point. An angular rate gyroscope's drive and sense modes are typically designed to be perfectly orthogonal to one another. Due to the imperfection during the microfabrication process or due to imbalanced mechanical springs, electrostatic force, and vibrating mass, unavoidable flaws occur in the orthogonality of the drive and sense modes which cause quadrature error. This is why quadrature compensation 311 may be an important trimming step. Moreover, the gyroscope can have a greater signal-to-noise ratio of the output signal without degrading the circuit noise when the driving mode and sensing mode have the same resonance frequency (mode matching). This is not the case which is why frequency compensation may be required as another trimming step. The closed control loop may comprise a feedback loop required to achieve control over the proof mass position of the sensor device in closed-loop circuitry. Through the feedback loop, in the occurrence of any rotation of the sensing element, an equal magnitude of the electrostatic force may be applied to the proof mass to counterbalance the inertial force. However, this method suffers from the non-linear relationship of the feedback voltage to electrostatic force, which is why a digital control strategy may be incorporated. Also, noise correction 315 may be required to clear the charge accumulation on the surface of the device and minimize the noise in the output. Sensitivity and offset compensation 316 may be followed this with a quality check step. After successfully completing the aforementioned steps, the correct operating point may be set for each sensor. These aforementioned parameters or requirements may have a specific value set associated with a process-defined value range in this trimming process. A single parameter may be associated with an individual measurement block where multiple predefined steps may be required to find the correct value.

Figure 4 illustrates an exemplarily read-and-write procedure performed for every single adjustment step, particularly inside the measurement block for every parameter in a single sensor. The initial value of the parameter may be stored in a register (see 401). This may trigger a change in the system, which can be internally measured by the ASIC (Application-Specific Integrated Circuit). The measurement result may then be recorded in the Output Register (see 402). Since the system undergoes changes, there may be a transient time known as the "Wait" time. This represents the duration required for the input parameter to take effect in the system, allowing one to observe its impact on the output register. The written value from the output register may then be read out and checked whether it resides within the process-defined limit 410 (see 403). If the value is within the acceptable limit, the process ends (see 404); else the value may be trimmed again to be written again in the register (see 405). The whole process may continue unless the condition is satisfied. Conventionally, the number of cycles required by the trimming process may be fixed and therefore cannot be altered, i.e., even if the correct working point for some sensors is, there may be no opportunity to terminate the process until the fixed number of cycles is completed. This iterative process applies to all the sensors undergoing the value adjustment simultaneously, i.e., the sensors are set in quasi-parallel.

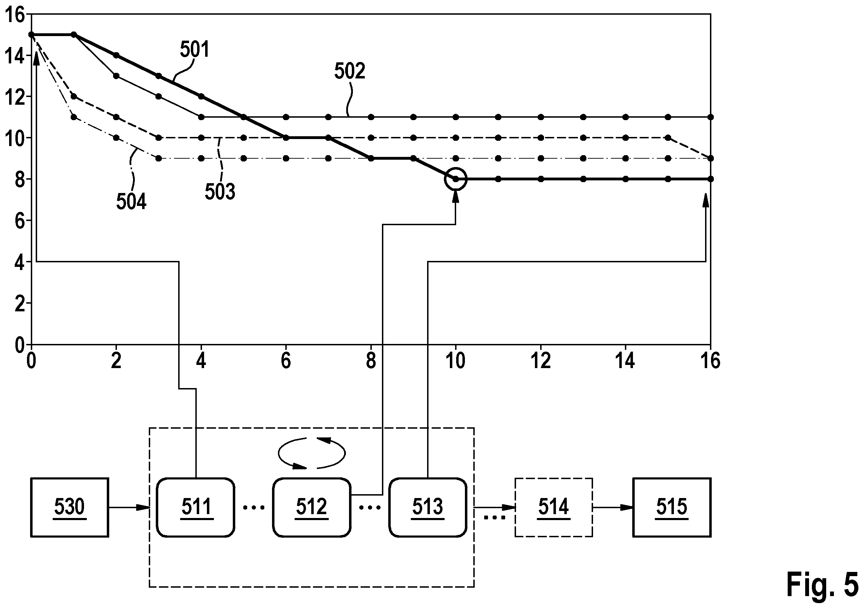

Figure 5 further illustrates the sequential adjustment steps performed in individual measurement blocks that may be optimized by embodiments of the invention. Only four trimming cases of one calibration block for four sensors 501, 502, 503, 504 are shown for the sake of simplicity. It should be kept in mind that, sensors, in the range of thousands, can be going through a similar process simultaneously. During this process, each sensor undergoes the full range of possible settings even though it has a narrow range for finding the correct operating point. As shown in Figure 5, each sensor may start with a process-defined starting point, i.e., step 511 (that may receive sensor data 530). Considering the line 501 in the graph, it can be seen that the optimal working point is achieved at step number 512 after going through several (for example nine) read-and-write steps. The trimming process for the current sensor is completed at this stage, but conventionally, it needs to continue for other parts. In this case, where the defined range is e.g., 16, the process undergoes an additional six rounds of read-and-write steps to fulfil the fixed sixteen-cycle process for other sensors (see final step 513, measurement block 514 and final working point 515). It is important to note that whether the trimming procedure continues for the current sensor or not depends on various factors, including the specific parameter being trimmed and the overall trimming strategy employed. This unnecessary prolonged trimming process showcase the inefficiency of the fixed setting approach of conventional solutions. The inflexibility in the process setting leads to all sensors going through the entire setting process, even if some sensors reached their final stage earlier. Therefore, the possibility provided by embodiments of the invention to predict the exact or an initial working point instead of relying on iterations, can significantly streamline the trimming process.

$$T = k * (t * s) \, (1)$$

Equation 1 further describes the sequential time consumption of individual measurement blocks. T represents the total time taken by the current calibration process. The value of T is determined by s, where s is the maximum number of steps required to trim a single sensor. The duration of a single step is represented by t. In case the products involved in the process are broken down into sub-units for manageability, the process may be repeated k times. To summarize, the calibration duration may be driven by the longest individual steps in that measurement unit. Thus, conventional sequential calibration processes often become time-consuming and needs to be optimized. According to embodiments of the invention, a smart trimming may therefore be provided, which can precisely predict the working point. By doing so, excessive iterations can be avoided to create a calibration process that is more effective and precise. The efficiency and efficacy of the trimming process can be considerably increased by incorporating such clever trimming techniques.

Embodiments of the invention may be based on a machine learning (ML) regression model, which is trained and tested on historical data that comprises component data and sensor information. The ML model-based results may be used for each measurement block to predict the initial and/or final working points and/or to remove the steps from the saturation point until the final step is reached. This helps to reduce the long sequential steps which further help in reducing the total calibration time T as shown in the equation 1. Along with that, an end- to-end monitoring architecture may be provided to capture data, model, or process anomalies.

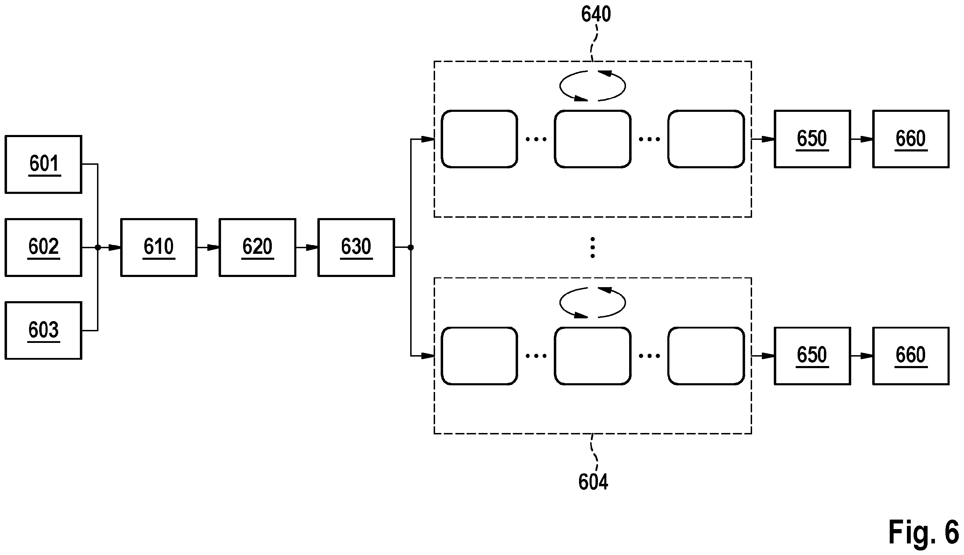

Figure 6 depicts a high-level overview of embodiments of the invention in place of the conventional calibration methods used for closed-loop MEMS inertial sensors. Due to the infrastructure development, advancement in computation resources, data availability, and storage, it can be possible to store the component and sensor information for further analysis, such as calibration or final measurement prediction purposes. In conventional processes, only sensor information may be used for the trimming. According to embodiments of the invention, the final data may be collected from at least one or all of three different sources, i.e., i) component data 601, ii) sensor data 602, and iii) internal measurement data 603. The collected data may then go through the data pre-processing stage 610. Data pre-processing can be important to verify the consistency of the data structure to be used in the prediction model. This stage may include checking for missing values, data type mismatch, data structure consistency, data availability in each column, data duplicate removal, data scaling, and feature selection. The clean data may then be fed to the optimized ML model 620. The model prediction may then undergo a model error check 630 to check if there is any process change. The comparison of the prediction with the originally measured points makes it possible to determine how far the furthest points are from the expected working point set conventionally. From the distance and the step spacing, it is possible to calculate the worst-case number of steps required for fine adjustment with AI to accurately adjust all products. Ultimately, this can also determine how many fewer steps will the AI-assisted calibration process take compared to the original traditional bound step sequence.

There can be two ways of implementing embodiments of the invention: a) Offline model implementation and b) Real-time model implementation. In the offline mode, utilizing only the component-level data 601 along with the sensor data 602, the model 620 may predict the working point, which is either equal or very close to the measured value and within the allowable threshold. In real-time implementation, the model prediction accuracy may be improved by using an earlier set of accurate working points or intermediate measurement data points 603 from an earlier step. Although the implementation needs a higher effort, it could provide further reduction of the necessary fine adjustment steps. In both cases, some fine adjustment steps 640 may be required to reach the final working point, as shown in Figure 6. It should be kept in mind that the fine adjustment steps 640 may be less than the total process steps. Afterwards, a quality check 650 may be carried out to provide the final working point 660.

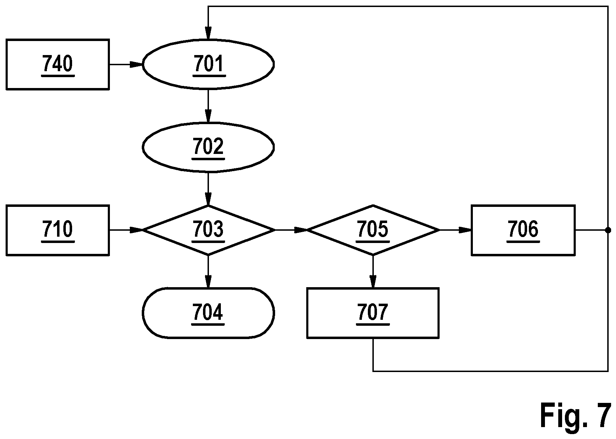

Figure 7 illustrates another embodiment according to the invention and particularly a read-and-write trimming procedure using the model prediction 740 for each measurement block in detail. The model-based predicted working point is then written into the "Input Register" (see 701), which is then read out from an "Output Register" with an intermediate optional wait time (see 702). This value then goes through the quality check to determine whether it falls within the process's limit (see 703, where the value is checked against a process defined limit 710). If yes, the value is set as the final working point without further read-and-write cycles (see 704). If the condition of the limit check is not satisfied, the calibration goes through a few more steps. First, it is checked how close the model prediction is to the final working point with the help of internal measurement data and model prediction results obtained earlier during the process. It is named here as "Step-Distance Check" 705 to check for the direction of the model value deviation. If the error distance is positive, the predicted value may be decreased by 1 (see 706) and if negative, the predicted value may be increased by 1 (see 707). These values are written into the input register. It should be kept in mind that the step distance is much smaller than the original sequential steps.

$$T = k * \{t * (1 \pm i)\} \, where \, i < s \, (2)$$

Equation 2 explains the time consumption of each measurement block using the architecture according to embodiments of the invention. Here, $t * 1$ is the writing and measuring time of the model predicted value into the input register and measure back the results from the output register. The fine adjustment step is denoted as $(t * \pm i)$. It is determined by the longest sequences, i.e., by the worst prediction. The advantage of the architecture is to reduce the number of steps over a long sequential process by making the process flexible. For certain measurement blocks, the model prediction could be used for the final working point settings, replacing all the intermediate read-and-write steps, i.e., when s = 1 the total time for the measurement block is $k * t$. For the other case, certain steps may be discarded based on the model results, and only a few more steps, i.e., i, are required to reach the final working point. The time saving may vary from process to process, but in this example, the approach saved calibration time of 48% for eight measurement blocks of the front-end trimming of the inertial sensor.

An embodiment for an end-to-end architecture for an efficient implementation of the framework according to embodiments of the invention in absence of any quality gate is described in the following. The architecture may be a hybrid decision system that utilizes both the traditional sequential and paralleled calibration software algorithm according to embodiments of the invention based on certain conditional evaluations. This is to ensure a smooth calibration process without any interruption in production. The real-time data may go through data processing to ensure data integrity. Several statistical and algorithmic measures may be incorporated into this block such as scaling, noise removal, etc. To ensure the data quality, the distribution of the processed real-time data may be compared with the previously prepared historical data based on a distance metric, Earth-Mover's Distance (EMD) score in the conditional block "Data Comparison". Here, a predefined EMD score may be set as a threshold per the requirement. In case of success, the process moves forward. The processed real-time data may then be fed into the trained ML model where the model predicts the final trimming points. The model performance may be evaluated using Root Mean Squared Error (RMSE) in the conditional block "Model Evaluation". If the RMSE value is within the threshold, the model performance is a success, and the process moves forward.

Feature selection can be an important step contributing directly toward the performance of the ML model. It helps in improving the model training by reducing noise and overfitting. Furthermore, optimal feature selection techniques help in improving model training time and interpretability. Irrelevant features can negatively affect the model performance and sometime may lead to the wrong conclusion. For example, a filter-based feature selection method SelectKBest may be applied. In the filter-based method, the feature selection technique relies on different statistical tests to rank the features based on their relationships with the target variable based on the statistical test score. Finally, K top features may be selected to train the model for the final prediction. This method is especially beneficial in terms of speed when the underlying dataset is too large. The score function used to evaluate and find the final optimal subset of features may be f_regression. It returns the F-statistics and the associated p-values of each feature, i.e., it computes how strongly an individual feature is related to the target. The stronger the relationship, the higher the p-values of the feature.

Various machine learning models may be used to estimate each target value from the selected features, such as Linear Regression (LR), Ridge Regression (RR), Elastic Net Regression, Polynomial Regression (PR), Stochastic Gradient Descent (SGD), XGBoost Regression and AdaBoost Regression.

$$MAE = \frac{1}{n} \sum_{i=1}^{n} \left| y_i^{\text{real}} - y_i^{\text{pred}} \right| \qquad (3)$$

$$RMSE = \sqrt{\frac{1}{n}\sum_{i=1}^{n}\left(y_i^{\text{real}} - y_i^{\text{pred}}\right)^2} \qquad (4)$$

For model performance evaluation different metrics such as Mean absolute error (MAE), and Root Mean Squared Error (RMSE) can be used as expressed by the equations 3 and 4 respectively. MAE calculates the absolute distance between the actual observations and the model predictions by averaging over the residual. The absolute value of the distances may be used to correctly account for negative mistakes. RMSE calculates the squared of the average magnitude of the error, i.e., the difference between the predicted and real values are squared individually and then averaged over the sample space. Both MAE and RMSE have a range of 0 to infinity. These are negative scores, i.e., lower values are preferable.

There exist many statistical methods and build metrics for numerical drift assessment. For example, the Wasserstein metric, a.k.a. Earth Mover's Distance (EMD) may be used. Formally, the Earth Mover's Distance (EMD) is a technique for determining the extent to which two multi-dimensional distributions differ in feature space in presence of ground distance 5. EMD can be thought of as the lowest "cost" of transforming one pile into another if each distribution is thought of as piles of soil (or earth). It is considered that it is equal to the required amount of earth multiplied by the average distance that may be covered and can be expressed by the following equation 5:

$$EMD(P,Q) = \inf f_{\gamma \in \Pi(P,Q)} E_{(x,y)\sim\gamma}[\|x - y\|] \qquad (5)$$

The two distributions P and Q may be used to determine the Wasserstein distance. x serves as the starting place, while y serves as the final destination. r is the operation's cost, and (P, Q) is the distribution of all feasible joint distributions P, Q.

EMD may be the difference of the cumulative distribution function between the test and train data and can be defined as the following equation 6:

$$EMD = \int_{-\infty}^{\infty} |F_{test}(x) - F_{train}(x)|\, dx \qquad (6)$$

where,

$$F(x) = \frac{\text{Number of samples } (\leq x)}{\text{Total number of samples}} \qquad (7)$$

Here, F(x) is the cumulative distribution function. The advantage of using EMD distance is that it remains the same compared to Kullback-Leibler (KL) in case of variance change as it is a joint distribution of two probability measures.

Preferably, the XGBosst regressor algorithm may be chosen as ML-model. The working principle of the XGBoost Regressor is based on the ensemble learning method where the predictions of several different weaker models are combined to produce a stronger, more precise model (see T. Chen and C. Guestrin, "Xgboost: A scalable tree boosting system," in Proceedings of the 22nd acm sigkdd international conference on knowledge discovery and data mining, 2016, pp. 785-794). Key advantages of this algorithm are handling missing and extensive data efficiently, flexibility due to a large number of hyperparameters available for tuning, regularization, parallel processing, bagging, boosting, nonlinearity, cross-validation, scalability, and more.

The above explanation of the embodiments describes the present invention in the context of examples. Of course, individual features of the embodiments can be freely combined with each other, if this is technically reasonable, without leaving the scope of the present invention.

**Claims**

1.   A method (100) for calibrating at least one on micro-electromechanical systems based inertial sensor (50), comprising the following steps:

   - Providing (101) input data, the input data comprising at least sensor data, the sensor data being specific for the at least one inertial sensor (50),

- Predicting (102) a working point by a machine-learning model based on the provided input data, the working point being specific for a parametrization of the at least one inertial sensor (50),
- Carrying out (103) iterative adjustment steps for a fine adjustment of the working point, the adjustment steps comprising a comparison of an effect of a currently set value with a reference value for each inertial sensor (50), the currently set value being set based on the predicted working point, the number of iterations of the adjustment steps being flexible and depended on the comparison,
- Providing (104) a final parameter field for the at least one inertial sensor (50) based on the predicted working point or the adjustment steps for the fine adjustment.

2. The method (100) of claim 1, **characterized in that** the step of carrying out (103) the iterative adjustment steps comprises:

- Storing the predicted working point,
- Using the stored working point as a current working point,
- Setting the currently set value at the at least one inertial sensor (50) based on the current working point, thereby setting a calibration measurement parameter at the at least one inertial sensor (50),
- Checking the current working point against a quality check condition, particularly by determining whether the current working point falls within a predefined limit and/or by carrying out the comparison of the effect of the currently set value with the reference value,
- Repeating the adjustment steps with the flexible number of iterations depending on the check until the quality check condition is fulfilled, thereby fine adjusting the current working point,
- Setting the current and particularly fine-adjusted working point as a final working point if the quality check condition is fulfilled,

the step of providing (104) the final parameter field comprising setting the calibration measurement parameter based on the final working point at the at least one inertial sensor (50).

3. The method (100) of any one of the preceding claims, **characterized in that** each one of the adjustment steps comprises at least one or multiple of the following trimming steps used to fine-adjust the working point: quadrature error compensation, misalignment compensation, mode matching, gain adjustment, frequency compensation, noise correction, sensitivity compensation, offset compensation.

4. The method (100) of any one of the preceding claims, **characterized in that** the calibration of the at least one inertial sensor comprises calibrating multiple inertial sensors at least partially in parallel, the adjustment steps being carried out in parallel for each of the inertial sensors.

5. The method (100) of any one of the preceding claims, **characterized in that** the provided input data is pre-processed, the pre-processed input data being provided as input for the machine-learning model, the pre-processing comprising at least one of the following: checking for missing values, checking for data type mismatch, checking for data structure consistency, checking for data availability, data duplicate removal, data scaling, and feature selection.

6. The method (100) of any one of the preceding claims, **characterized in that** the at least one inertial sensor is configured for an application with an autonomous vehicle, the at least one inertial sensor comprising a gyroscope, the gyroscope being sensitive to an angular velocity of the motion of the vehicle relative to the inertial space, and the at least one inertial sensor comprising an accelerometer, the accelerometer being sensitive to linear acceleration of the vehicle.

7. The method (100) of any one of the preceding claims, **characterized in that** the input data further comprises component data and/or internal measurement data, the component data being specific for component-level measurements, and the internal measurement data resulting from an earlier calibration.

8. A computer program (20), comprising instructions which, when the computer program (20) is executed by a computer (10), cause the computer (10) to carry out the method (100) of any one of the preceding claims.

9. A data processing apparatus (10), comprising means for carrying out the method (100) of any one of claims 1 to 7.

10. A computer-readable storage medium (15) comprising instructions which, when executed by a computer (10), cause the computer (10) to carry out the steps of the method (100) of any one of claims 1 to 7.

Fig. 1

Fig. 2

Fig. 3

Fig. 4

Fig. 5

Fig. 6

Fig. 7

Europäisches
Patentamt

European
Patent Office

Office européen
des brevets

# EUROPEAN SEARCH REPORT

**Application Number**

EP 23 18 4935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 607 542 B (KUNMING INST PHYSICS) 10 December 2014 (2014-12-10) * the entire document, in particular the cited passage from the attached machine translation. * ----- | 1-10 | INV. G01C25/00 G01P21/00 ADD. G06N20/00 |

| TECHNICAL FIELDS SEARCHED (IPC) |
|---|
| G01C G01P |

The present search report has been drawn up for all claims

| Place of search | Date of completion of the search | Examiner |
|---|---|---|
| The Hague | 1 February 2024 | Pascheka, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                  
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 4935**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-02-2024**

| Patent document cited in search report | Publication date | Patent family member(s) | Publication date |
|---|---|---|---|
| CN 102607542 B | 10-12-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAENAKA**. MEMS inertial sensors and their applications. *2008 5th International Conference on Networked Sensing Systems*, 2008, 71-73
- **F. HUANG** ; **Z. WANG** ; **L. XING** ; **C. GAO**. A MEMS IMU gyroscope calibration method based on deep learning. *IEEE Transactions on Instrumentation and Measurement*, 2022, vol. 71, 1-9
- An extensive analysis for the use of back propagation neural networks to perform the calibration of mems gyro bias thermal drift. **FONTANELLA** ; **R. FONTANELLA** ; **D. ACCARDO** ; **E. CARICATI** ; **S. CIMMINO** ; **D. DE SIMONE et al.** IEEE/ION Position, Location and Navigation Symposium (PLANS). IEEE, 2016, 672-680
- Calibration of mems based inertial measurement unit using long short-term memory network. **J. WANG** ; **W. LOU** ; **W. LIU** ; **P. LIU**. 2019 IEEE 14th International Conference on Nano/Micro Engineered and Molecular Systems (NEMS). IEEE, 2019, 118-121
- **L. WANG** ; **Y. GUAN** ; **X. HU**. Compounded calibration based on fnn and attitude estimation method using intelligent filtering for low-cost mems sensor application. *Mathematical Problems in Engineering*, vol. 2019, 2019
- **R. FONTANELLA** ; **D. ACCARDO** ; **R. S. L. MORIELLO** ; **L. ANGRISANI** ; **D. DE SIMONE**. Mems gyros temperature calibration through artificial neural networks. *Sensors and Actuators A: Physical*, 2018, vol. 279, 553-565
- **T. CHEN** ; **C. GUESTRIN**. Xgboost: A scalable tree boosting system. *Proceedings of the 22nd acm sigkdd international conference on knowledge discovery and data mining*, 2016, 785-794